# EUROPÄISCHE PATENTSCHRIFT

(11) **EP 1 868 792 B1**
(45) Veröffentlichungstag und Bekanntmachung des Hinweises auf die Patenterteilung: **02.07.2008**
(21) Anmeldenummer: 06705388.4
(22) Anmeldetag: 14.03.2006
(51) Int. Cl.: B29C 51/16

(54) **FORMEINLAGEFOLIE, FORMVERFAHREN SOWIE KUNSTSTOFFGEBILDE**
THERMOFORMING PROCESS, IN-MOULD FILM, FORMING SHEET AND PLASTIC PRODUCT
PROCÉDÉ DE THERMOFORMAGE, FILM, FEUILLE ET ARTICLE EN PLASTIQUE

(30) Priorität: 15.03.2005 EP 05405244; 08.09.2005 DE 202005014188 U
(43) Veröffentlichungstag der Anmeldung: 26.12.2007
(73) Patentinhaber: Auer, Hans, 8126 Zumikon (CH)
(72) Erfinder: Auer, Hans, 8126 Zumikon (CH)
(74) Vertreter: Ritscher, Thomas
(86) Internationale Anmeldenummer: PCT/CH2006/000148
(87) Internationale Veröffentlichungsnummer: WO 2006/097006

(56) Entgegenhaltungen:
- GB-A- 784 503
- US-A- 4 474 725
- US-A- 5 061 333
- PATENT ABSTRACTS OF JAPAN Bd. 012, Nr. 305 (M-733), 19. August 1988 (1988-08-19) -& JP 63 081021 A (TSUTSUNAKA PLAST KOGYO KK), 11. April 1988 (1988-04-11) -& DATABASE WPI Section Ch, Week 198820 Derwent Publications Ltd., London, GB; Class A32, AN 1988-137949 XP002339196 & JP 63 081021 A (TSUTSUNAKA PLASTIC IND CO LTD) 11. April 1988 (1988-04-11)

## Beschreibung

Die Erfindung betrifft allgemein die Herstellung von mit mono- oder polychromatischen Beschriftungen, Bildern und/oder Mustern versehenen, d.h. "dekorierten" Artikeln aus Kunststoff und speziell Formeinlagefolien (engl.: in-mould films oder in-mould labels), wie sie an sich in der Spritzgusstechnik bekannt sind und dabei in eine Form eingelegt werden, wo sie während des Spritzgiessens mit dem in die Form eingespritzten flüssigen Polymermaterial verbunden werden und nach dessen Erstarrung und Entnahme aus der Form auf dem erhaltenen Formgebilde die Dekoration bilden.

Die Verwendung solcher Formeinlagefolien ist jedoch bisher praktisch auf die verhältnismässig kostspielige Spritzgusstechnik beschränkt. Aus Gründen der Kostenminimierung wäre es aber auch wünschbar, Formeinlagefolien mit kostengünstigeren Thermoformungsverfahren, wie z.B. Tiefziehverfahren, verwenden zu können. Dies würde jedoch nach dem bisherigen Stand der Technik nur unter Vakuumbedingungen, wie z.B. in US-A-5 061 333 beschrieben, zu einer akzeptablen Verbindung der Formeinlagefolie mit der Formungsfolie ohne unerwünschte Lufteinschlüsse zwischen der Dekorfolie und der Formfolie führen, was aus wirtschaftlichen Gründen für die Massenfertigung der Verpackungsindustrie nicht allgemein praktikabel ist.

Die zur vorliegenden Erfindung führenden Versuche haben gezeigt, dass es bei einer praxisgerechten Durchführung solcher Thermoformungsverfahren in Gegenwart von Gas bzw. Luft an der Grenzfläche zwischen der plastischen Formungslage und der Formeinlagefolie zu blasenförmigen Lufteinschlüssen kommt, die ein normalerweise nicht akzeptables Aussehen der erhaltenen dekorierten Kunststoffartikel zur Folge haben. Ausserdem kommt es nach bisherigem Stand der Technik bei solchen Versuchen zu einem "Einziehen", d.h. der Bildung einer rillen - oder wulstförmigen Schrumpfverformung.

Versuche, die Formeinlagefolien zur Verwendung für Tiefziehverfahren mit feinen Perforationen in gleichmässiger Verteilung zu versehen ("diskontinuierliche" Folien) lieferten bisher Ergebnisse, die für eine kommerzielle Fertigung häufig nicht akzeptabel sind, weil es oft zu unansehnlichen blasenförmigen Lufteinschlüssen an der Grenzfläche kommt. Auch Versuche zur Verwendung von Formeinlagefolien auf der Basis von "geschlossenen" ("massiven" oder "kontinuierlichen") Folien, d.h. solchen ohne makroskopische Perforationen, die wegen ihrer molekularen Struktur ausreichend permeabel für Gas bzw. Luft sind, führten nicht zu einer praktikablen Lösung, zumal die im Ergebnis normalerweise praktisch nicht gasdurchlässige Druckschicht diesem Ansatz entgegen wirkt. Analoges gilt auch für die aus US-A 4 474725 bekannten und relativ grossen Durchbrechungen in der Einlagefolie und deren gegebenenfalls vorhandene lokale Einschnitte, kleinen Kanäle oder Oberflächenmuster.

Schliesslich führten auch Versuche, die Schmelzeigenschaften der Formeinlagefolien oder ihrer Oberflächen zu modifizieren, nicht zu einem sicheren Ausschluss der Bildung von Lufteinschlüssen zwischen der Formeinlagefolie und der für Tiefziehverfahren typischen Formungslage aus bahnförmig zusammenhängender, plastischer Polymermasse. Aus US-A 3 203 611 ist es zur Herstellung von Trinkbehältern mit thermisch isolierenden Ausschenschichten bekannt, in einer Form einen vorgeformten Aussenkörper aus Schaumstoff innnenseitig durch Blasformen mit einer Kunststofflage zu verbinden. Hierbei kann der Aussenkörper mit Rillen, Perforationen oder mit einer aussensetigen Profilierung versehen werden. Hierbei sind weder Schrumpfverformungen noch Lufteinschlüsse zwischen dem isolierenden Aussenkörper und der angeformten Innenlage weder von kritischer Bedeutung bedeutsam noch mit Sicherheit zu vermeiden.

Dies alles gilt aber nicht nur für Tiefziehverfahren sondern für alle im Vergleich zu Spritzgussverfahren weniger kostspieligen Kunststoff-Formungsverfahren, die allgemein als Thermoformungsverfahren bezeichnet werden und bei denen sich nicht wie beim Spritzgussverfahren die geschmolzene Masse erst in der Form verfestigt, sondern bei denen eine Lage aus thermoplastisch verformbarer Polymermasse - hier Formungslage genannt - in thermoplastischem aber zusammenhängenden Zustand in eine Form gebracht und in dieser durch Zug- beziehungsweise Sog- oder Druckkräfte der Form angepasst, d.h. ausgeformt wird. Beispiele solcher Verfahren sind ausser dem häufig bevorzugten Tiefziehverfahren das Formpressen, die Vakuumformung, das Gummisackverfahren und die Blasformung.

Eine erste Aufgabe der Erfindung ist es daher, eine Formeinlagefolie für ein Thermoformungsverfahren der eben angegebenen Art zu bieten, d.h. ein solches, bei dem eine zusammenhängende oder kohärente Formungslage aus thermoplastisch verformbarem Polymermaterial in plastischem Zustand in eine Form gezogen oder gepresst und dabei mit einer Formeinlagefolie verbunden wird, ohne dass es unter gewöhnlichen Arbeitsbedingungen, d.h. in normaler Atmosphäre, zu Lufteinschlüssen kommt, die zu einem unbrauchbaren Aussehen des erhaltenen dekorierten Kunststoffgebildes führen.

Eine weitere Aufgabe der Erfindung sind Formeinlagefolien, mit welchen die Bildung von Schrumpfrillen sicher verhindert werden kann, und zwar sowohl bei Thermoformungsverfahren als auch bei Spritzgussverfahren.

Diese Aufgaben werden gemäss einer ersten allgemeinen Ausführungsform der Erfindung durch eine Formeinlagefolie mit den Merkmalen von Anspruch 1 gelöst. Bevorzugte Ausführungsformen der erfindungsgemässen Formeinlagefolie haben die Merkmale der Ansprüche 2-5.

Gemäss weiteren Ausführungsformen bietet die Erfindung ein Verfahren zur Herstellung eines Formkörpers mit den Merkmalen von Anspruch 6 und den bevorzugten Ausführungsformen der Ansprüche 7-11 sowie geformte Kunststoffgebilden mit den Merkmalen von Anspruch 12.

Überraschenderweise wurde in den zur Erfindung führenden Untersuchungen gefunden, dass sich die Bildung von Lufteinschlüssen bei Verwendung von Formeinlagefolien bei Tiefzieh- und ähnlichen Formverfahren, die nicht wie das Spritzgussverfahren mit praktisch flüssiger Polymermasse sondern mit bahn- oder blattförmigen, aber thermisch plastifizierten Polymerlagen arbeiten, blasenförmige Lufteinschlüsse durch eine vorgängige Strukturierung der Grenzfläche zwischen der Formeinlagefolie und der Formungslage verhindert werden, und dass auf diese Weise auch die Bildung von Schrumpfrillen nicht nur bei Thermoformverfahren sondern auch beim Spritzgussverfahren sicher vermieden werden kann.

In der Praxis wird hierzu gemäss der Erfindung die Oberfläche der Formeinlagefolie z.B. durch Prägen, Pressen, Walzen und dergleichen Formverfahren strukturiert bzw. "geprägt", wobei diese Bezeichnung nicht von der Art des angewendeten Verfahrens abhängt, sondern davon, dass die jeweils erzielte Oberflächenstruktur das Aussehen ergibt, wie es üblicherweise als Prägung angesehen wird und allgemein dadurch charakterisiert ist, dass die Oberfläche auf mindestens einer Seite eine Vielzahl von auf der Oberfläche gleichmässig verteilten Einsenkungen aufweist. Die durch Prägen erzeugte Strukturierung kann sich an der Aussenseite des fertigen Kunststoffgebildes mehr oder weniger stark abzeichnen, d.h. entweder zu einer mehr oder weniger ausgeprägten Verminderung der Dicke der geprägten Folie führen oder aber im Bereich der Prägungen die gleiche Foliendicke aufzuweisen, wie die nicht geprägte Folie. Dies wird weiter unten noch ausführlicher erläutert.

Das erfindungsgemässe Formverfahren und die erfindungsgemässen Formeinlagefolien sind sowohl zur Herstellung von praktisch ebenen oder gleichmässig, d.h. flächig gekrümmten Gebilden, z.B. durch Walzen, als auch zur Herstellung von stark profilierten Gegenständen, wie Bechern, Geschirr, Verpackungen und dergleichen geeignet, insbesondere und gemäss einer bevorzugten Ausführungsform durch Tiefziehen, aus den in der Kunststoff-Verarbeitungstechnik üblichen Polymermaterialien.

Als Polymermaterialien werden hier allgemein synthetische makromolekulare Substanzen, einzeln oder in Mischungen und mit oder ohne Zusätze, wie Weichmacher, Füllstoffe, Pigmente, Stabilisatoren, Modifikatoren, Flammhemmittel, UV-Filter und dergleichen verstanden, wie sie für Thermoformungsverfahren bekannt und üblich sind. Der Polymeranteil solcher Massen kann aus Homopolymeren, Copolymeren oder Polymermischungen bestehen und zusammen mit allfälligen Zusätzen zu Folien oder Platten verarbeitet werden, die sich mindestens vorübergehend in einen thermisch erweichten Zustand bringen lassen, wie dies meist durch Erwärmen einer vorgeformten Kunststofflage oder -folie oder aber durch Weiterverarbeiten einer noch in thermisch plastischem Zustand vorliegenden Polymerlage unmittelbar anschliessend an ihre Herstellung, z.B. durch Walzen oder Giessen, erzielt wird.

Typische nicht abschliessende Beispiele für die Polymerkomponente solcher Massen sind Polyalkane, wie Polyethylen und Polypropylen, Polyvinylpolymere, wie modifizierte Polystyrole, Polycarbonate, Polyester, Polyether, thermoplastische Polyurethane und dergleichen.

Typische Dicken der Formungslage liegen im Bereich von etwa 50 µm bis etwa 50 mm, wobei jedoch weder die untere noch die obere Grenze kritisch ist und von verschiedenen Parametern, wie Formtiefe, Formgrösse und dem Verwendungszweck der daraus hergestellten Formteile abhängt. Dabei können sowohl einheitliche Formungslagen als auch solche aus mehreren Komponenten verwendet werden, wie sie durch Co-Extrusion oder andere Verfahren zur Herstellung von mehrschichtigen oder beschichteten Lagen aus Polymermaterial erhältlich sind.

Als Formeinlagefolien (engl.: in-mold films) sind hier zunächst prinzipiell alle Folien der Art geeignet, wie sie für Spritzgussverfahren bereits verwendet werden. Dabei können sowohl einlagige als auch mehrlagige Folien verwendet werden, wie sie durch Co-Extrusion, Extrusionsbeschichtung oder anderen bekannten Verfahren erhalten werden können und auch geschäumte Lagen aufweisen können. Obwohl bevorzugte Formeinlagefolien für die Erfindung im wesentlichen aus thermoplastischer Polymermasse bestehen, ist dies insofern nicht absolut kritisch, als auch unter Umständen andere Folien einschliesslich solcher aus Metall, wie Aluminium, oder Metall-Kunststoffverbundfolien für das erfindungsgemässe Verfahren brauchbar sind, wenn sie die Bildung entsprechend geprägter Flächen ermöglichen bzw. sich durch entsprechende Verfahren mit einer geprägten Oberfläche versehen lassen und mindestens auf der Seite, welche mit der Formungslage die Grenzfläche bilden soll, mit der Polymermasse der Formungslage kompatibel ist und nötigenfalls mit einem als Haftvermittler wirkenden Polymer beschichtet ist. Typische Dicken solcher Folien liegen im Bereich zwischen etwa 10 µm und etwa 1000 µm, z.B. 10-100 µm, die in einer für Formeinlagefolien üblichen Weise bedruckt sind, um den damit hergestellten Artikeln das gewünschte Aussehen zu geben.

Für die Erfindung als Formeinlagefolien geeignete Folien sind bekannt und im Handel erhältlich. Sie werden vor der Verwendung nach unterschiedlichen Verfahren, z.B. Tief-, Flexo-, Sieb-, Offset- und Buchdruck aber auch auf andere Weise, z.B. durch Sublimationsdruck oder photooptische Verfahren mit der gewünschten Dekoration bzw. Beschriftung versehen, und zwar auf der Seite, die im fertigen Gebilde an einer Aussenseite liegt, da die meisten Druckfarben die Bildung einer festen Verbindung verhindern. Ausnahmsweise, z.B. bei gerasterten Drucken oder mit entsprechend bindungsfähigen Druckfarbenmassen ist es allerdings auch möglich, die Dekorschicht an der Seite aufzubringen, die mit der Formungslage verbunden werden soll. Die Formeinlagefolie kann auch Beschichtungen aufweisen, die, wie z.B. Beschichtungen mit Haftvermittler, das Oberflächenverhalten in einer gewünschten Weise modifizieren, beispielsweise um die Benetzbarkeit für das Polymermaterial des Formkörpers zu erhöhen und/oder der Aussenseite des Formkörpers bestimmte Oberflächeneigenschaften zu verleihen. Die bekannten Formeinlagefolien mit Selbstklebeschichten hingegen werden nicht zuletzt aus Kostengründen für die Erfindung nicht bevorzugt.

Beim erfindungsgemässen Verfahren ist die Grenzschicht zwischen Formungslage und Formeinlagefolie durch Prägen strukturiert, um die Bildung von Lufteinschlüssen zwischen diesen Schichten zu vermeiden. Dies bedeutet, dass zum Zeitpunkt des Zusammenführens der Formungslage mit der Formeinlagefolie die Formungslage selbst und/oder die Formeinlagefolie im Bereich des Kontaktes miteinander, d.h. jeweils an den einander zugewandten Seiten ihrer Oberflächen, eine solche Struktur aufweisen. Bei ausreichender Strukturierung der Formungslage sollte es möglich sein, die Bildung von Luftblasen an der Grenzfläche auch mit einer nicht strukturierten bzw. geprägten, d.h. nicht erfindungsgemässen Formeinlagefolie zu erreichen, doch kann es dann zur Bildung von Schrumpfrillen kommen, weshalb die Verwendung von ungeprägten Formeinlagefolien für das erfindungsgemässe Verfahren nicht bevorzugt wird.

Erfindungsgemässe Formeinlagefolien zur Verwendung in Spritzgussverfahren müssen stets eine Strukturierung nach Art einer Prägung aufweisen, die erfindungsgemäss zur Vermeidung vom Schrumpfrillen und von Lufteinschlüssen dient.

Spezielle Angaben und Beispiele finden sich weiter unten in der Beschreibung. Wegen der grossen Zahl von Parametern, die das Ergebnis beeinflussen können, wie unterschiedliche Polymertypen und Polymer-Strukturvariablen für die Formeinlagefolien einerseits und die Formungslage bzw. die Spritzgussmasse andererseits sowie die Verfahrensbedingungen beim Ausformen ist eine abschliessende Angabe nicht möglich, kann jedoch im gegebenen Fall anhand von einigen wenigen und einfachen Versuchen auf Grund der hier gegebenen Lehren ermittelt werden.

Es wurde gefunden, dass blasenförmige Lufteinschlüsse und Schrumpfrillen mit ganz unterschiedlichen regelmässigen oder unregelmässigen geprägten Oberflächenstrukturen der Formeinlagefolie vermieden werden können. Allgemein wird als "Prägung" bzw. als "geprägte" oder "strukturierte" Oberfläche hier eine nicht völlig planare sondern eine solche Oberfläche verstanden, die verteilte Erhebungen ("Berge") und Einsenkungen ("Täler") besitzt, vorzugsweise in gleichmässiger Verteilung.

Zur Vereinfachung wird für die nachfolgende Erläuterung ein homogenes Prägungsmuster angenommen, d.h. die höchsten Erhebungen liegen in einer gemeinsamen Ebene während die tiefsten Einsenkungen ebenfalls auf einer gemeinsamen Ebene liegen, die von der Ebene der höchsten Erhebungen um die Differenz zwischen der ungeprägten Foliendicke und der maximalen Prägungstiefe entfernt ist.

Dabei ist zu unterscheiden zwischen einer einseitigen Prägung, bei der alle Erhebungen und Einsenkungen auf derselben Seite der Folie liegen während die andere Seite der Folie praktisch eben oder "glatt" ist, und einer zweitseitigen Prägung, bei der beide Seiten der Folie mit Erhebungen und Einsenkungen versehen sind. Bei einseitig geprägten Folien ist die effektive örtliche Foliendicke unterschiedlich, je nachdem ob man die Entfernung der glatten Seite von einer Erhebung (bzw. der gemeinsamen Ebene der höchsten Erhebungen) oder von einer Einsenkung (bzw. der gemeinsamen Ebene der tiefsten Einsenkungen) misst.

Auch bei beidseitig geprägten Folien kann die effektive örtliche Foliendicke grundsätzlich unterschiedlich sein. Für viele Zwecke der Erfindung wird jedoch eine beidseitige Prägung bevorzugt, bei welcher die Erhebungen auf der einen Seite der Folie mit den Einsenkungen auf der anderen Folienseite im wesentlichen übereinstimmen und die effektive örtliche Foliendicke der geprägten Folie praktisch der Dicke der ungeprägten Folie ist.

Unabhängig davon, ob eine Folie mit einseitiger oder zweiseitiger Prägung verwendet wird, ist stets eine Seite einer erfindungsgemässen Folie und vorzugsweise die beim fertigen Produkt aussen liegende Seite mit einer normalerweise durch Bedrucken erhaltenen Dekorschicht (Schrift- und/oder Bilzeichen und/oder Muster) versehen.

Es wird angenommen, dass die Wirkungsmechanismen, welche zur Vermeidung von Lufteinschlüssen führt sowohl mit einseitig als auch mit doppelseitig geprägten Folien erzielt werden kann. Zur Vermeidung von Schrumpfrillen ist jedoch in der Regel eine doppelseitige Prägung wirksamer, weshalb solche doppelseitig geprägten Folien mit einer aussenseitigen Dekorschicht eine besonders bevorzugte Ausführungsform der Erfindung darstellen. Die Bezeichnungen "aussenseitig" bzw. "innenseitig" im Zusammenhang mit den Folien beziehen sich dabei jeweils auf die Seite der Folie, die beim fertigen Formkörper aussen liegt.

Schrumpfrillen würden gemäss diesen Modellvorstellungen dadurch vermieden, dass die vorzugsweise doppelseitige Prägung der Folie eine ausreichende Streckfähigkeit verleiht und Lufteinschlüsse dadurch vermeidet, dass sich an der Grenzfläche keine das Aussehen störenden zusammenhängenden grossen blasenförmigen Lufteinschlüsse bilden können.

Im typischen Fall liegt die Prägungstiefe im Bereich von etwa 5% bis etwa 200%, vorzugsweise etwa 10% bis etwa 100% der Dicke der Formeinlagefolie. In absoluten Zahlen ist für viele Zwecke der Erfindung eine Prägungstiefe der jeweiligen Oberfläche von mindestens etwa 1 µm und vorzugsweise mehr als 5 µm, insbesondere mindestens etwa 10 µm geeignet. Als "Prägungstiefe" bzw. "Strukturtiefe" wird dabei die in Längeneinheiten angegebene Differenz zwischen der obersten gemeinsamen Ebene aller "Berge" und der untersten gemeinsamen Tiefe aller "Täler" auf einer und nur einer Seite der Folie bezeichnet. Mit anderen Worten wird bei doppelseitig geprägten Folie die Prägungstiefe auf nur einer der beiden Seiten als die hier relevante Grösse angesehen.

Der terminologische Unterschied zwischen "Prägung" und "Struktur" ist dadurch bedingt, dass "Prägung" ein im wesentlichen festes Material voraussetzt. Bei der thermisch plastifizierten Formungslage, deren für die Grenzschicht bestimmte Seite gemäss einer Ausführungsform des erfindungsgemässen Verfahrens ebenfalls mit einer Vielzahl von kleinen Einsenkungen und Erhebungen versehen werden kann, wird daher die Bezeichnung "strukturieren" bzw. "strukturiert" in Bezug auf eine gegebene Oberfläche der Sachlage besser gerecht, als die Bezeichnung "prägen" bzw. "geprägt".

Wenn sowohl die Formungslage als auch die Formeinlagefolie strukturiert bzw. geprägt ist, sind auch entsprechend kleinere absolute Werte als die eben angegebenen geeignet. Die Strukturtiefe kann jedoch auch höher als eben angegeben liegen, wenn das Polymermaterial der Formungslage entsprechend fliessfähig ist. Auch das Optimum der Strukturtiefe der Formungslage kann für gegebene Polymermaterialien mit wenigen einfachen Versuchen festgestellt werden.

Um störende Lufteinschlüsse zwischen der Formfolie und der Formeinlage sicher zu vermeiden, sollte die Strukturierung bzw. Prägung vorzugsweise praktisch frei von geschlossenen Bereichen sein, d.h. mit anderen Worten ein "offenes Muster" bilden. Damit soll eine Oberflächenstruktur charakterisiert werden, bei der die höchsten, in einer gemeinsamen Ebene liegenden Berge miteinander keine ringförmigen oder polygonalen "Teiche" oder "Seen" bilden. Zur Vermeidung von Schrumpfrillen ist dies jedoch nicht erforderlich.

Schematische Beispiele von Strukturen zur Vermeidung von Lufteinschlüssen werden anhand der Zeichnungen noch eingehender erläutert. Modellhaft als Beispiel einer erfindungsgemäss geeigneten Struktur ist ein Feld aus gleichförmigen Erhebungen in Form von Kegeln, Pyramiden oder Kalotten, deren oberen Enden gemeinsam eine höchste gemeinsame Ebene definieren und wobei die Räume zwischen den Erhebungen miteinander in Verbindung stehen. Dies bedeutet jedoch nicht, dass die Struktur geometrisch gleichförmig oder homogen sein muss. Vielmehr können auch unregelmässige Strukturen verwendet werden, sofern sie ein durchwegs "offenes Muster" bilden. Strukturen dieser Art können auf Folien durch einseitige oder doppelseitige Prägung gebildet werden

Die Strukturierung bzw. Prägung der beim Tiefziehen und anderen Thermoformverfahren für den gegenseitigen Kontakt im Formungswerkzeug bestimmten Oberfläche der Formungslage oder/und der Formeinlagefolie kann mit ganz unterschiedlichen Methoden und Werkzeugen erzielt werden. Die Formungslage kann z.B. in thermisch plastifiziertem Zustand, vorzugsweise im Zuge der Fertigung oder der Durchführung des Thermoformverfahrens durch ein Walzenpaar geführt werden, von denen die eine das Negativ der gewünschten Oberflächenstruktur bildet und die andere eine glatte Oberfläche hat.

Andererseits kann die für den Kontakt mit der Formeinlagefolie bestimmte Oberfläche der Formungslage auch in nicht-plastischem Zustand mit der gewünschten Struktur versehen werden, z.B. durch Prägen in kaltem Zustand oder durch Kontakt mit einem beheizten Werkzeug.

Die Formeinlagefolie kann vor oder nach dem Bedrucken mit der gewünschten Oberflächenstruktur bzw. Prägung versehen werden, z.B. durch Prägen oder Pressen zwischen einem Walzenpaar, von dem die eine Walze mit einem Muster versehen ist oder eine Auflage aus einem gemusterten Material ausreichender Festigkeit trägt und die andere Walze ("Gegenwalze") eine glatte Oberfläche besitzt. Zweiseitige Prägungen sind in analoger Weise erhältlich, wenn die Gegenwalze einen gummielastischen Belag besitzt und die Folie musterartig in den Belag hineingedrückt wird.

Die Oberflächenstrukturierung kann bei der Durchführung des erfindungsgemässen Verfahrens erhalten bleiben, z.B. wenn die Strukturierung bzw. sich nur auf der Formungslage befindet oder wenn das thermoplastische Material der Formungslage die Strukturierung der Formeinlagefolie ausfüllt. Für das Ergebnis der Verbindung ist dies jedoch im allgemeinen nicht von Belang. Gewünschtenfalls kann sich ein genügend starkes bzw. doppelseitig geprägtes Muster auf der Aussenseite eines fertigen Kunststoffgebildes abzeichnen und diesem eine zusätzliche haptische Gestaltung verleihen.

Hingegen ist es wie bereits kurz erwähnt zweckmässig und wird allgemein bevorzugt, dass das Polymermaterial der Formungslage mit dem Polymermaterial der Formeinlagefolie kompatibel, d.h. verschmelzbar bzw. verklebbar ist, um eine praktisch nur unter Zerstörung lösbare Verbindung zu erreichen. Die Bedeutung und das Ausmass der Kompatibilität der Polymermaterialien von Formungslage und Formeinlagefolie sind jedoch beim erfindungsgemässen Verfahren meist weniger kritisch als bei den bekannten sogenannten Inmould-Spritzgussverfahren mit Formeinlagefolien.

Für die Durchführung der erfindungsgemässen Formverfahren können die für diese Verarbeitungstechnik bekannten und im Handel erhältlichen Warmformungsanlagen, z.B. Tiefzieh- oder Formpresswerkzeuge verwendet werden, die den Fachleuten bekannt sind und daher keiner besonderen Erläuterung bedürfen. Für das Einführen der Formeinlagefolien können die aus der Inmould-Spritzgusstechnik bekannten und im Handel erhältlichen Vorrichtungen, z.B. Einlegeroboter verwendet werden und auch hierzu kann auf das Wissen der Fachleute verwiesen und auf eine ausführlichere Erläuterung verzichtet werden. Man kann aber auch ab Rolle arbeiten und die entsprechend mit Struktur versehenen Labels z.B. durch Stanzen oder andere Schneidverfahren im Formwerkzeug oder vor diesem bilden.

Gemäss der Erfindung können Artikel für völlig unterschiedliche Zwecke hergestellt werden, z.B. für dekorierte und/oder beschriftete Konsumartikel, wie Becher, Flaschen, Dosen für Lebensmittel oder andere Verpackungszwecke, für Blisterpackungen, Deckel, Einlagen und Trays, Gehäuse, Kaschierteile, Sportgeräte, Klappverpackungen, Kühlschränke, Modellbauartikel, Sanitärartikel, Schalen, Skinverpackungen, Teller, Werbe- und Lernmittel, für die Innenausstattung von Land- oder Luftfahrzeugen und für viele andere Gebrauchsgegenstände.

In den beigeschlossenen Zeichnungen zeigen:
Figur 1 die schematische Darstellung einer Thermoformung;
Figur 2 die schematische Ansicht einer Einrichtung zur Strukturierung einer Formeinlagefolie;
Figur 3 die schematische Ansicht einer Einrichtung zur Strukturierung einer Formungslage;
Figur 4 eine halb-schematische, stark vergrösserte perspektivische Darstellung einer strukturierten Oberfläche einer erfindungsgemässen Formungslage oder/und Formeinlagefolie,
Figuren 5 A und 5B die schematische Schnittansicht von Folien mit ungeprägten, zweiseitig und einseitig geprägten Oberflächen
Figuren 5 C - 5 F verschiede Beispielstrukturierter Oberflächen, und
Figur 6 die schematische Darstellung einer Schrumpfrille.

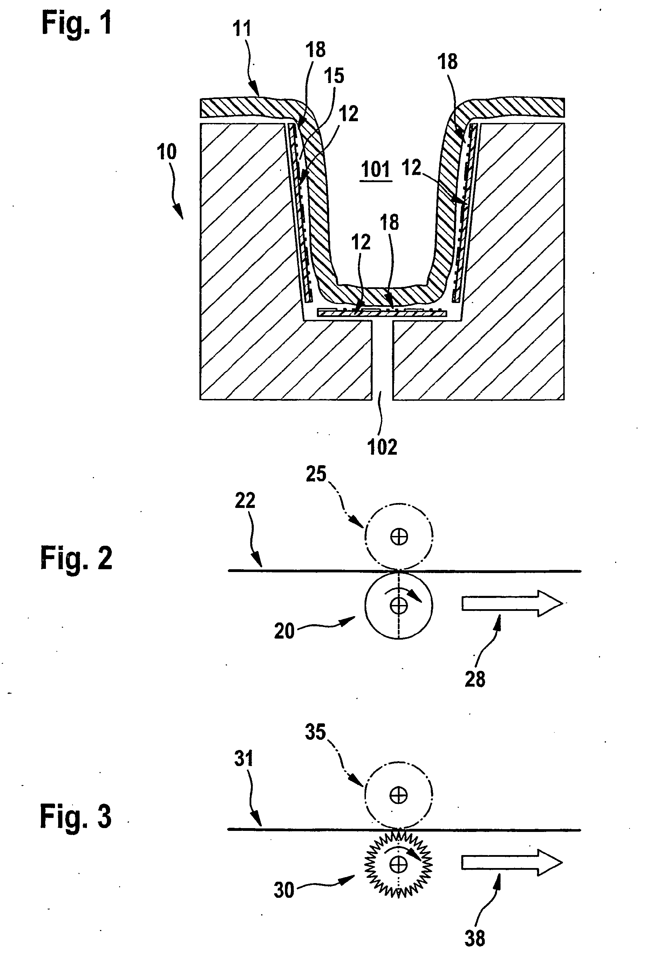

Fig. 1 erläutert schematisch ein Form- bzw. Tiefziehverfahren. Die Formungslage 11 ist als Folge eines vorgängigen Herstellungsschrittes oder durch Erwärmung auf eine Temperatur im Erweichungsbereich des Polymermaterials gebracht, so dass die Formungslage noch kohärent und handhabungsfähig ist. Sie wird in das Werkzeug 10 und wahlweise durch einen (nicht dargestellten) Stempel, durch Anlegen eines Unterdrucks durch die Leitung 101 oder mittels eines (nicht dargestellten) Gummisacks in den Formhohlraum 101 gezogen bzw. gepresst oder geblasen.

Im Formraum ist die Formeinlagefolie 12 an den Wandungen der Form 10 und/ oder an deren Boden eingelegt. Sofern mit einem Saugformverfahren gearbeitet wird und die Form 10 Saugöffnungen 102 besitzt, ist es nicht erforderlich, die Formeinlagefolie im Bereich der Saugöffnungen zu strukturieren, sofern die Saugwirkung ausreicht, um Lufteinschlüsse zwischen der Formeinlagefolie 12 und der Formungslage 11 zu vermeiden.

Beim (nicht dargestellten) Ausformen legt sich die Formungslage 11 an die Formwandungen und verschmilzt oder verklebt mit der Formeinlagefolie 12. Die Oberfläche der Formeinlagefolie 12 ist an der mit der Formungslage 11 in Berührung kommenden Seite mit einer schematisch angedeuteten Struktur 18 versehen, wodurch sich die Luft im Zwischenraum 18 beim Ausformen verdrängen lässt, ohne Lufteinschlüsse zwischen der Formungslage 11 und der Formeinlagefolie 12 zu bilden. Die (nicht dargestellte) Dekor-Druckschicht liegt auf der Aussenseite der Formeinlagefolie 12, d.h. an der Seite, die an der Form 10 anliegt. Die beim Formen der schematisch in Fig. 1 dargestellten Art üblichen Stempel bzw. Rückhalter für die thermisch plastisch gemachte Formungslage 11 sind der Einfachheit nicht gezeichnet.

Allgemein können die für Thermoformverfahren üblichen Massnahmen angewendet und die dazu üblichen Vorrichtungen bzw. Werkzeuge verwendet werden, wobei die Formeinlagefolien nicht nur an planar gekrümmte Flächen sondern auch an kalottenförmig gewölbte Flächen angelegt werden können, da sie in der Regel mindestens in begrenztem Masse verformbar sind.

Wie in Figur 2 schematisch dargestellt, kann die Formeinlagefolie 12 bzw. 22 dadurch strukturiert werden, dass sie in der durch den Pfeil 28 angedeuteten Arbeitsrichtung durch ein Walzenpaar 20,25 geführt wird, dessen eine Walze z.B. glatt und dessen andere Walze ein Muster aus Vorsprüngen besitzt, die dem Negativ der zu erzeugenden Struktur auf der Formeinlagefolie 22 entspricht.

In ähnlicher Weise kann auch die Formungslage 11 bzw. 31 entsprechend der schematischen Darstellung von Figur 3 zur Bildung der gewünschten Struktur über eine Profilierungswalze 30 geführt werden, falls gewünscht unter dem Druck einer glatten oder ebenfalls profilierten Gegenwalze 35.

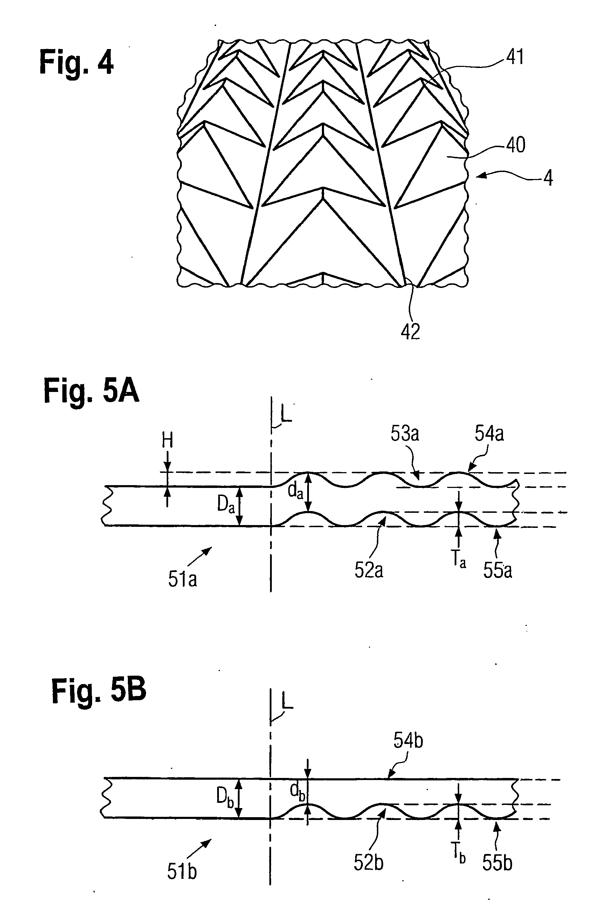

Fig. 4 zeigt in halbschematischer perspektivischer und stark vergrösserter Darstellung eine Struktur 4, wie sie erfindungsgemäss auf der Kontaktseite der Formeinlagefolie oder/und der Kontaktseite der Formlage gebildet wird, um den Einschluss von Luft bei der Ausformung und - bei Verwendung einer geprägten Formeinlagefolie - auch die Bildung einer Schrumpfrille zu vermeiden. Die Tiefe der in Fig. 4 dargestellten Struktur ist durch den Abstand zwischen der Ebene, in der die Spitzen 41 der pyramidenförmigen Auswölbungen 40 liegen, und der gemeinsamen Ebene der zwischen den Pyramiden verlaufenden Täler 42 definiert. Wenn eine Struktur der in Fig. 4 dargestellten Form auf einer Formeinlagefolie gebildet werden soll, geschieht dies vorzugsweise durch zweiseitiges Prägen (siehe Fig. 5A). Die Struktur- bzw. Prägetiefe beträgt in der Regel mindestens etwa 5 µm, kann aber auch ein Mehrfaches dieses Wertesund z.B. etwa Formverfahren 10 bis etwa - 50 µm betragen, wobei typische Dicken der Formeinlagefolie im Bereich von etwa 20 - 200 µm liegen. Wenn die Struktur 4 diejenige der Oberfläche einer Formeinlagefolie ist, sind die Formen der Auswölbungen in der Regel weniger kantigausgebildet und vorzugsweise durch zweiseitiges (= doppelseitiges) Prägen gebildet.

Fig. 5 A zeigt in schematischer Schnittansicht eine Formeinlagefolie 51a, die längs der senkrechten strichpunktierten Linie L in ungeprägtem Zustand mit der Dicke Dₐ und rechts der Linie L mit zweiseitiger Prägung dargestellt ist und an der Oberseite mit Einsenkungen 53a und Erhebungen 54a versehen ist, denen an der Unterseite die Einsenkungen 52a und die Erhebungen 55a entsprechen.

Die Dicke dₐ der Formeinlagefolie 51a im geprägten Bereich rechts der Linie L ist praktisch gleich der Dicke Dₐ der ungeprägten Folie links der Linie L. Als Prägetiefe wird bei zweiseitig geprägten Folien nur die Dimension Tₐ berücksichtigt, die praktisch gleich der Höhe H ist. Die "scheinbare" Dicke der doppelseitig geprägten Folie 51 a ist um den Betrag von H grösser als die effektive Dicke Dₐ bzw. dₐ.

Die Prägungstiefe Tₐ einer erfindungsgemässen Formeinlagefolie 51a wird meist zweckmässig so bemessen, dass die Prägung unter der Wirkung des beim Formungsvorgang auftretenden Drucks im wesentlichen geglättet wird, sofern nicht aus Gründen der Haptik eine gewisse Oberflächenrauhigkeit gewünscht ist.

Fig. 5 B zeigt in analoger Darstellung wie in Fig. 5A eine einseitig geprägte Formeinlagefolie 51b, die links der Linie L in ungeprägtem Zustand dargestellt ist und dort die Dicke D_{b} hat. Im geprägten Bereich rechts der Linie L hingegen ist die Foliendicke in Bereichen zwischen der praktisch glatten Oberfläche 54b und den Einsenkungen 52b um die Prägetiefe T_{b} vermindert.

Es ist zu betonen, dass die Figuren 5A und 5B lediglich schematische Darstellungen sind und keine realen Dimensionen oder Dimensionsverhältnisse zeigen. Die in beiden Darstellungen nicht gezeigte Dekorschicht liegt im Regelfall jeweils auf derjenigen Seite der Formeinlagefolie, die beim Formungsvorgang der Formwand benachbart ist und am fertigen Formgebilde aussen liegt, wie dies bei konventionellen Formeinlagefolien üblich ist.

Zwischen den beiden Prägeformen, die in den Fig. 5A und 5B dargestellt sind, gibt es eine nahezu beliebe Vielfalt von Übergängen, etwa indem auch bei zweiseitiger Prägung Bereiche mit verminderter Dicke dₐ entstehen können, weil an der Ober- und Unterseite unterschiedliche Oberflächenstrukturen ausgebildet werden. Da die Verformbarkeit von Kunststofffolien von einer Vielzahl von Faktoren abhängig ist, wie Orientierung, Kettenlänge, Verknäuelung, Verzweigungsgrad, Weichmachungsgrad und weiteren Parametern von synthetischen Polymeren, ist es nicht möglich, hier abschliessende und stets gültige Angaben zu machen. Fachleuten ist es jedoch ohne weiteres möglich, im gegebenen konkreten Fall die für eine Optimierung erforderlichen Parameter an Hand von bekannten einfachen Testverfahren zu ermitteln.

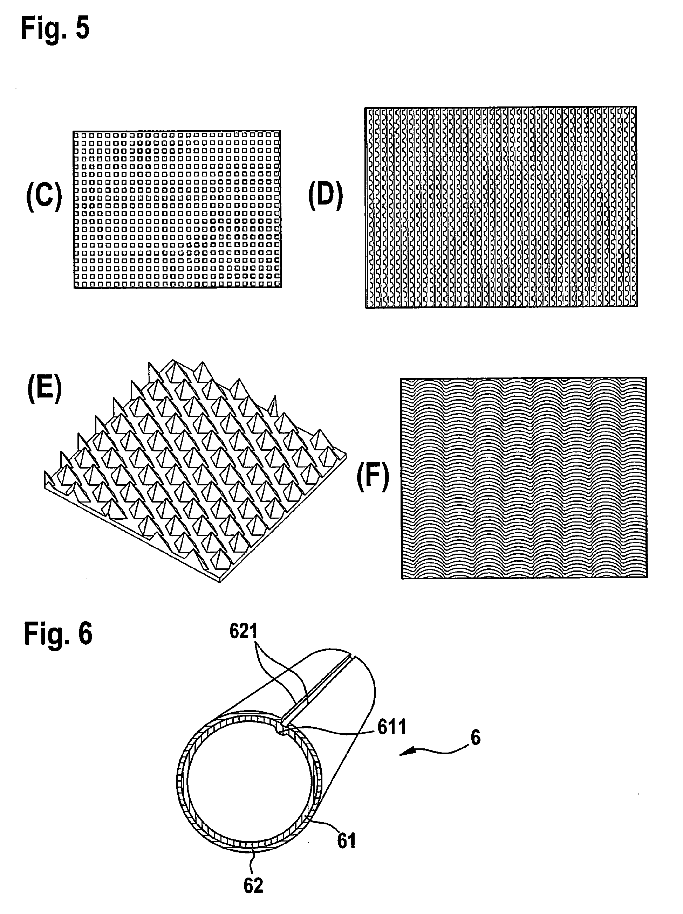

In den Figuren 5C, 5D, 5E und 5 F sind einige nicht abschliessende Beispiele für Strukturen dargestellt, wie sie erfindungsgemäss zur Verhinderung der Bildung von Lufteinschlüssen zwischen der Formeinlagefolie und der Formlage verwendet werden können und jeweils mindestens auf einer der am Verbund direkt beteiligten Formschichten, d.h. der Formeinlagefolie oder/und der Formungslage vorgesehen werden. Eine durch beidseitiges Prägen gemäss Fig. 5 A erhaltene Strukturierung wird bei all diesen Formen bevorzugt.

Allgemein können solche Prägungen dadurch erhalten werden, dass auf der zur Strukturbildung verwendeten Walze 20 (Fig. 2) ein Geflecht aus Metalldraht, z.B. aus rostfreiem Stahl, oder Kunststoff-Monofilamenten, z.B. aus Teflon, aufgelegt wird , das beim Durchlaufen des Walzenpaares 20,25 in die Formeinlagefolie eingedrückt bzw. eingeprägt wird, wobei auf der Gegenwalze vorzugsweise eine elastische Auflage angeordnet ist, so dass die in Fig. 5A dargestellte zweiseitigen Prägung entsteht.

Insgesamt sollen die Figuren 5C - 5F verdeutlichen, dass ganz unterschiedliche Struktur- bzw. Prägemuster verwendet werden können und die Optimierung jeweils entsprechend den verwendeten Materialien, Materialdicken, Formgrössen und den Verfahrensbedingungen an Hand von einfachen Versuchen ermittelt werden kann.

Fig. 6 zeigt die schematische Schnittdarstellung durch einen (nicht erfindungsgemässen) zylindrischen oder konischen Formkörper aus einer Formungslage 61 und einer damit verbundenen Formeinlagefolie 62. Als Folge der Schrumpfung der Formeinlagefolie 62 beim Abkühlen und Verfestigen der Formungslage 61 bildet sich in der letzteren im Bereich der Seitenkanten 621 der Formeinlagefolie eine Rille 611. Dabei versteht sich, dass insbesondere die Dicke der Formeinlagefolie zur besseren Darstellbarkeit übertrieben gross dargestellt ist. Der Querschnitt der Rille kann mehr oder weniger wulstförmig ausgebildet sein, weshalb die Bezeichnungen "Schrumpfrille" und "Schrumpfwulst" gleichbedeutend sind und in jedem Fall die Erscheinung bezeichnen, die in der Fachwelt auch "Einzug" oder "Einziehen" genannt wird.

Auch die Dicke der Auswölbung der Formungslage ist übertreiben dargestellt. In der Praxis kann das "Einziehen" ganz unterschiedlich stark ausgeprägt sein, lässt sich aber in jedem Fall durch Abtasten mit dem Finger deutlich wahrnehmen und verhindert einen satten Sitz eines sonst auf den Formkörper passenden Deckels, der den Formkörper ohne Schrumpfrille sonst dicht verschliessen würde.

Die Bildung einer solchen rillen- oder wulstförmigen Schrumpfstelle ist jedenfalls ein in der Fachwelt bekanntes Problem bei der Verwendung von Formeinlagefolien, und zwar nicht nur bei bisherigen Versuchen mit Thermoformanlagen sondern sogar auch bei bekannten Spritzgussverfahren. Dies ist in jedem Fall höchst unerwünscht, da es insbesondere für die Passung im Bereich eines Verschlussdeckels nachteilig ist.

Durch Verwendung von erfindungsgemässen Formeinlagefolien kann bei beiden Typen von Formverfahren die Bildung einer derartigen Schrumpfrille vermieden werden. Der Wirkungsmechanismus ist noch nicht völlig geklärt. Es wird angenommen, dass durch die Strukturierung bzw. Prägung der Formeinlagefolie deren Dehnungseigenschaften und jedenfalls deren Anpassungsfähigkeit mindestens soweit verbessert wird, dass die Bildung von Schrumpfrillen dadurch vermieden werden kann.

Die Erfindung wird nachfolgend anhand von nicht beschränkenden Beispielen erläutert.

### Beispiel 1

Eine kommerziell von der Firma Treofan Germany GmbH, Raunheim, Deutschland, unter der Bezeichnung EUH erhältliche weisse Folie aus orientiertem Polypropylen (OPP) mit einer Dicke von 75 µm zur Verwendung als bedruckbare Formeinlagefolie für PP- oder PE-Spritzguss wurde in einem Druckwerk geprägt, indem auf die glatte Walze ein Sieb aus einander überkreuzenden Teflon©fäden mit einer Dicke von etwa 0.2 mm gelegt und die Folie bei einer Druckspannungseinstellung von 0.2 zwischen der mit dem Sieb belegten Walze und der Gegenwalze mit Gummibelag geprägt wurde, so dass die eine Seite der Folie als Prägung eine offene Strukturierung entsprechend dem Siebmuster mit einer Tiefe von etwa 30 µm zeigte und die andere Seite nur leicht verformt war.

Die so erhaltene strukturierte Folie wurde manuell in einer Tiefziehmaschine der Firma Adolf Illig, Heilbronn, Deutschland mit einer Formungslage aus nicht orientiertem Polypropylen mit einer Dicke von 1000 µm in üblicher Weise nach den Betriebsvorschriften der Herstellerfirma durch Tiefziehen zu einem Becher geformt.

Die Formeinlagefolie war bei dem entstandenen Becher gleichmässig und ohne Lufteinschlüsse mit der Formungslage verbunden. Die erhaltenen Becher zeigten kein Einziehen, d. h. keine Schrumpfrille.

### Beispiel 2 ("Vergleich)

Es wurde in gleicher Weise wie in Beispiel 1 gearbeitet, jedoch ohne Prägung der Formeinlagefolie.

Der so durch Tiefziehen erhaltene Becher zeigte grossflächige Lufteinschlüsse und war für kommerzielle Zwecke unbrauchbar. Ausserdem war im Bereich der Seitenkanten der Formeinlagefolie ein innenseitiger Wulst zu erkennen.

### Beispiel 3

Es wurde wie in Beispiel 1 mit folgenden Abänderungen gearbeitet: die Formungslage aus nicht orientiertem Polypropylen mit einer Dicke von 1000 µm wurde vor der Einführung in die Tiefziehanlage aber bereits in thermisch plastifiziertem Zustand über eine Rolle geführt, deren Oberfläche aus einem Muster von kleinen, aneinander grenzenden negativen Pyramiden in einer Dichte von etwa 60 Einsenkungen pro cm² versehen war, so dass die Unterseite der Formungslage annähernd der Darstellung in Figur 4 entsprach. Ferner wurde die in Beispiel 1 beschriebene Folie, jedoch im ursprünglichen und beidseitig glatten Zustand verwendet.

Der erhaltene Becher zeigte zwischen der Formeinlagefolie und der Formungslage keine Lufteinschlüsse.

### Beispiel 4

Ähnliche Ergebnisse wie in den vorangehenden Beispielen wurden erhalten, wenn die im fertigen Becher aussen liegende Fläche der Formeinlagefolie durch Siebdruck mit einer mehrfarbigen Dekoration versehen worden war.

### Beispiel 5

Ähnliche Ergebnisse wie in den vorangehenden Beispielen werden erhalten, wenn anstelle einer Formungsfolie aus Polypropylen eine solche aus HD-Polyethylen verwendet wird.

### Beispiel 6

Gleichwertige Ergebnisse wie in den vorangehenden Beispielen werden auch erhalten, wenn anstelle einer OPP-Folie eine solche aus einem zur Verwendung für Tiefziehverfahren modifizierten Polymer auf Basis von Polystyrol und als Formungslage eine aus einem damit kompatiblen Polystyrolpolymer verwendet wird.

### Beispiel 7

Bei einem bekannten Spritzgussverfahren zur Herstellung von Joghurtbechern wurde bei Verwendung einer bekannten und kommerziell erhältlichen Formeinlagefolie viel Ausschussware durch Einziehen an den Bechern erhalten. Nachdem die Folie in der in Beispiel 1 angegebenen Weise mit einer Profilierung bzw. Prägung versehen worden war, konnte problemlos und ohne Ausschussware durch Einziehen produziert werden.

Die obigen Beispiele dienen lediglich der Erläuterung. Für Fachleute ergeben sich ohne weiteres zahlreiche Abänderungen der oben erläuterten erfinderischen Lehre zur Verwendung von Formeinlagefolien (Inmould films) in Thermoformverfahren der oben angegebenen Art. Wie Fachleuten bekannt, werden solche Verfahren in der Regel mit Mehrfachformen durchgeführt, die 20, 40, 80 oder mehr Formkörper in einem Takt herstellen können und mit Taktzeiten von 10-40 pro Minute arbeiten. In diesem Fall sind für das Einbringen der Formeinlagefolien entsprechend leistungsfähige Automaten erforderlich, wie dies aus der Spritzgusstechnik an sich bekannt ist. Ferner können ausser den oben genannten thermoplastisch verarbeitbaren synthetischen Polymermassen auch solche aus biologisch abbaubaren Werkstoffen, wie thermoplastischen Polymilchsäuren verwendet werden.

Soweit in der vorliegenden Beschreibung Zahlenangaben mit Ausdrücken wie "etwa", "circa" oder "ungefähr" qualifiziert sind bedeutet dies eine zulässige Abweichung von ± 50% vom angegebenen Wert.

## Patentansprüche

1. Formeinlagefolie (12) mit einer Polymerfolie und einer Dekorschicht auf dieser, **dadurch gekennzeichnet, dass** die Polymerfolie eine geprägte Oberfläche besitzt, deren Prägungstiefe ausreicht, um an einem damit hergestellten Formkörper, der aus mindestens einer Formungslage (11) und mindestens einer mit dieser verbundenen Formeinlagefolie (12) besteht, die Bildung von Schrumpfrillen und/oder die Bildung von signifikanten Lufteinschlüssen praktisch zu vermeiden, wobei die Prägungen praktisch gleichmässig auf der Formeinlagefolie verteilt sind.

2. Formeinlagefolie (12) nach Anspruch 1, **dadurch gekennzeichnet, dass** die Prägungen eine Prägungstiefe (Tₐ;T_{b}) besitzen, die etwa 10 bis etwa 100% der Dicke (D,dₐ) der Formeinlagefolie beträgt, wobei die Dekorschicht auf derjenigen Seite der Formeinlagefolie liegt, die in dem damit hergestellten Formkörper an der Aussenseite liegt.

3. Formeinlagefolie (12) nach Anspruch 1 oder 2, **dadurch gekennzeichnet, dass** sie beidseitig geprägt ist und eine mittlere Tiefe von mehr als 1 µm und vorzugsweise von mehr als 5 µm aufweist.

4. Formeinlagefolie (12) nach einem der Ansprüche 1-3, **dadurch gekennzeichnet, dass** die Prägung der Oberfläche der Formeinlagefolie (12) praktisch frei von geschlossenen Bereichen ist.

5. Formeinlagefolie (12) nach einem der Ansprüche 1-4 zur Verwendung für die Herstellung von Formkörpern, insbesondere durch Thermoformverfahren, wie Tiefziehen.

6. Formverfahren, bei dem eine Formungslage (11) aus thermoplastisch verformbarem Polymermaterial in zusammenhängendem aber plastischem Zustand geformt und dabei mit einer Formeinlagefolie (12) verbunden wird, wobei die Grenzschicht (15) zwischen der Formungslage (11) und der Formeinlagefolie (12) eine Strukturierung (18) aufweist, um die Bildung von Lufteinschlüssen zwischen der Formeinlagefolie (12) und der Formungslage (11) sowie die Bildung einer Schrumpfrille an erhaltenen Formkörper dadurch zu vermeiden, dass die Strukturierung durch Prägungen bewirkt wird, die praktisch gleichmässig auf der Formeinlagefolie verteilt sind.

7. Formverfahren nach Anspruch 6, **dadurch gekennzeichnet, dass** die Strukturierung (18) eine Prägung auf derjenigen Seite der Formeinlagefolie (12) besitzt, die der Formungslage (11) zugewendet ist und die Dekorschicht auf derjenigen Seite der Formeinlagefolie (12) liegt, die der Formungslage (11) abgewendet ist.

8. Formverfahren nach Anspruch 6, **dadurch gekennzeichnet, dass** die Strukturierung (18) durch beidseitige Prägung der Formeinlagefolie gebildet ist.

9. Formverfahren nach Anspruch 6, **dadurch gekennzeichnet, dass** die Strukturierung (18) der Formeinlagefolie (12) und/oder der Formungslage (11) vorgängig zum Formverfahren, z. B. durch Prägen oder Pressen, gebildet wird und die Formeinlage vor dem Pressen oder Prägen mit einer Dekorschicht auf derjenigen Seite versehen worden ist, die der Formeinlage abgewendet ist.

10. Verwendung einer Formeinlagefolie (12) gemäss einem der Ansprüche 1-4 zur Herstellung von Kunststoffgebilden, bei der das Kunststoffgebilde in einer Form hergestellt wird, in welche eine Formeinlagefolie eingelegt ist, die bei der Ausformung des Kunststoffgebildes dessen Aussenfläche bildet.

11. Verwendung nach Anspruch 10 zur Herstellung von Kunststoffgebilden durch ein Thermoformungsverfahren, insbesondere Tiefziehverfahren, bei dem eine Formungslage (11) aus thermoplastisch verformbarem Polymermaterial in plastischem Zustand in einer Form (10) zur Ausformung des Kunststoffgebildes gezogen und/oder gepresst und/oder geblasen und dabei in der Form mit der Formeinlagefolie (12) verbunden wird.

12. Kunststoffgebilde, erhalten durch die Verwendung gemäss Anspruch 10 oder 11.

## Claims

1. An in-mould film (12) comprising a polymer film and a decorative stratum thereon, **characterized in that** said polymer film has an embossed surface, the embossing depth of which is sufficient to prevent formation of shrink creases and/or formation of significant air inclusions in a moulded body produced therewith, said body consisting of at least one moulding layer and an in-mould film (12) bound thereto, wherein said embossings are distributed on said in-mould film in a substantially uniform manner.

2. The in-mould film (12) according to claim 1, **characterized in that** the embossings have an embossing depth (Tₐ;T_{b}) of about 10 to about 100% of thickness (D,dₐ) of said in-mould film, wherein the decorative stratum is located on that side of the in-mould layer which forms the outer side of a moulded body produced therewith.

3. The in-mould film (12) according to claims 1 or 2, **characterized in that** it is embossed on both sides and has an average depth of more than 1 µm and preferably of more than 5 µm.

4. The in-mould film (12) according to one of claims 1 - 3, **characterized in that** the embossing of the surface of said in-mould film (12) is substantially free of closed areas.

5. The in-mould film (12) according to one of claims 1 - 4 for use in the production of moulded bodies by thermoforming methods, such as deep drawing.

6. A moulding method in which a moulding layer (11) of a thermoplastic mouldable polymer material in a coherent yet plastic state is moulded while being connected with an in-mould film (12), wherein the boundary layer (15) between said moulding layer (11) and said in-mould layer (12) shows a structuring (18) so as to prevent formation of air inclusions between said in-mould layer (12) and said moulding layer (11) as well as formation of a shrinkage crease on the moulded body produced therewith by causing said structuring by embossings distributed substantially uniformly on said in-mould layer.

7. The moulding method of claim 6, **characterized in that** said structuring (18) comprises an embossing on that side of said in-mould layer (12) which faces said moulding layer (11) while said decorative stratum is on that side of said in-mould layer (12) which is averted from said moulding layer (11).

8. The moulding method of claim 6, **characterized in that** said structuring (18) is provided by embossing on both sides of said in-mould film.

9. The moulding method of claim 6, **characterized in that** said structuring (18) of said in-mould layer (12) and/or said moulding layer (11) is formed, prior to moulding, e.g. by embossing or pressing, and that said in-mould layer, prior to pressing or embossing, is provided with a decorative stratum on that side which is averted from said moulding layer.

10. Use of an in-mould film (12) according to one of claims 1 - 4 for manufacture of a plastics article wherein said plastics article is produced in a mould into which an inlay film has been inserted which upon shaping of said plastics article forms the outer surface thereof.

11. The use of claim 10 for manufacture of plastics articles by thermo moulding methods, notably a deep drawing process in which a moulding layer (11) of a thermoplastically mouldable polymer material in plastic state in a mould (10) is drawn und/or pressed and/or blown for shaping said plastics article and bound to said in-mould layer (12) in said mould.

12. A plastics article obtained by the use according to claim 10 or 11.

## Revendications

1. Film intercalaire de moulage (12) comprenant une feuille polymère et une couche de décoration sur la feuille, **caractérisé par le fait que** la feuille polymère possède une surface gaufrée dont la profondeur de gaufrage est suffisante pour éviter pratiquement la formation de rainures de retrait et/ou la formation d'inclusions d'air importantes sur un corps moulé ainsi fabriqué formé d'au moins une couche de formage (11) et d'au moins un film intercalaire de moulage (12) relié à cette couche, les gaufrages étant répartis de manière pratiquement uniforme sur le film intercalaire de moulage.

2. Film intercalaire de moulage (12) selon la revendication 1, **caractérisé par le fait que** les gaufrages ont une profondeur de gaufrage (Tₐ; T_{b}) comprise entre à peu près 10 et à peu près 100% de l'épaisseur (D, dₐ) du film intercalaire de moulage, la couche de décoration étant située sur le côté du film intercalaire de moulage qui est situé sur le côté extérieur dans le corps moulé ainsi fabriqué.

3. Film intercalaire de moulage (12) selon la revendication 1 ou 2, **caractérisé par le fait que** le film est gaufré sur les deux côtés et a une profondeur moyenne supérieure à 1 µm et, de préférence, supérieure à 5 µm.

4. Film intercalaire de moulage (12) selon l'une des revendications 1-3, **caractérisé par le fait que** le gaufrage de la surface du film intercalaire de moulage (12) est pratiquement exempt de zones fermées.

5. Film intercalaire de moulage (12) selon l'une des revendications 1-4, destiné à être utilisé pour la fabrication de corps moulés, notamment par des procédés de thermoformage tel l'emboutissage.

6. Procédé de moulage, dans lequel une couche de formage (11) formée d'un matériau polymère pouvant subir une déformation thermoplastique est moulée à l'état cohérent mais plastique et reliée, au cours de cette opération, à un film intercalaire de moulage (12), la couche limite (15) entre la couche de formage (11) et le film intercalaire de moulage (12) étant pourvue d'une structuration (18) pour éviter la formation d'inclusions d'air entre le film intercalaire de moulage (12) et la couche de formage (11) ainsi que la formation d'une rainure de retrait sur le corps moulé obtenu en produisant la structuration au moyen de gaufrages qui sont répartis de manière pratiquement uniforme sur le film intercalaire de moulage.

7. Procédé de moulage selon la revendication 6, **caractérisé par le fait que** la structuration (18) comprend un gaufrage sur le côté du film intercalaire de moulage (12) tourné vers la couche de formage (11) et la couche de décoration est située sur le côté du film intercalaire de moulage (12) éloigné de la couche de formage (11).

8. Procédé de moulage selon la revendication 6, **caractérisé par le fait que** la structuration (18) est formée par un gaufrage sur les deux côtés du film intercalaire de moulage.

9. Procédé de moulage selon la revendication 6, **caractérisé par le fait que** la structuration (18) du film intercalaire de moulage (12) et/ou de la couche de formage (11) est formée préalablement au procédé de moulage, par gaufrage ou pressage par exemple, et l'intercalaire de moulage a été pourvu d'une couche de décoration sur le côté éloigné de l'intercalaire de moulage avant le pressage ou le gaufrage.

10. Utilisation d'un film intercalaire de moulage (12) selon une des revendications 1-4 pour la fabrication d'articles en plastique, où l'article est fabriqué dans un moule dans lequel on intercale un film intercalaire de moulage qui forme, lors du démoulage de l'article en plastique, la surface extérieure de ce dernier.

11. Utilisation selon la revendication 10 pour fabriquer des articles en plastique grâce à un procédé de thermoformage, notamment un procédé d'emboutissage, dans lequel une couche de formage (11) formée d'un matériau polymère pouvant subir une déformation thermoplastique est étirée et/ou pressée et/ou soufflée à l'état plastique dans un moule (10) en vue du démoulage de l'article en plastique et reliée au film intercalaire de moulage (12) dans le moule au cours de cette opération.

12. Article en plastique obtenu grâce à l'utilisation selon la revendication 10 ou 11.
